# EUROPÄISCHE PATENTSCHRIFT

(11) **EP 0 403 799 B1**
(45) Veröffentlichungstag und Bekanntmachung des Hinweises auf die Patenterteilung: **21.07.1993**
(21) Anmeldenummer: 90109321.1
(22) Anmeldetag: 17.05.1990
(51) Int. Cl.: F16D 65/12

(54) **Bremsscheibe für Scheibenbremsen**
Brake disc for disc brakes
Disque à frein pour freins à disque

(30) Priorität: 22.06.1989 DE 3920418
(43) Veröffentlichungstag der Anmeldung: 27.12.1990
(73) Patentinhaber: Schwäbische Hüttenwerke Gesellschaft mit beschränkter Haftung, D-73414 Aalen (DE)
(72) Erfinder: Schwarz, Günther, D-7200 Tuttlingen 16 (DE)
(74) Vertreter: Jackisch, Walter

(56) Entgegenhaltungen:
- EP-A- 0 352 502
- DE-A- 2 728 335

## Beschreibung

Die Erfindung bezieht sich auf eine Bremsscheibe für Scheibenbremsen, insbesondere für Kraftfahrzeuge, der im Oberbegriff des Patentanspruches 1 angegebenen Gattung.

Eine solche Bremsscheibe ist beispielsweise aus der DE-PS 25 57 649 bekannt. Bei dieser bekannten Bremsscheibe sind der Innentopf und die Reibscheibe als separate Gußteile hergestellt. Die Bremsscheibe wird auf dem Innentopf von einer Vielzahl von Rippen getragen, die in entsprechende Vertiefungen des Innentopfes eingelassen sind und auf deren radial außen liegenden Enden die Reibscheibe formschlüssig befestigt ist. Damit die Rippen nicht einzeln eingesetzt werden müssen, ist bereits vorgeschlagen worden, die Rippen untereinander als Rippenkranz zu verbinden.

Es ist die Aufgabe der vorliegenden Erfindung, eine Bremsscheibe der gattungsgemäßen Art zu schaffen, die der unterschiedlichen Beanspruchung des Innentopfes und des Scheibenkranzes besser entspricht, die auf einfache Weise herstellbar ist, und die darüberhinaus eine Entkopplung hinsichtlich unterschiedlicher Dehnungskoeffizienten bietet.

Diese Aufgabe wird bei einer Bremsscheibe der genannten Art durch die kennzeichnenden Merkmale des Anspruches 1 gelöst.

Die wesentlichen Vorteile des Erfindungsgegenstandes sind darin zu sehen, daß der Innentopf, der selbst bei großer Einwirkung von mechanischer und thermischer Belastung formstabil sein sollte, aus einem Material mit hoher Zugfestigkeit besteht. Demgegenüber ist der Scheibenkranz aus einem Material mit geringerer Zugfestigkeit hergestellt, da derartige Gußwerkstoffe mit geringerer Zugfestigkeit einen relativ großen Anteil von freiem Graphit aufweisen und dadurch thermisch beständig gegen Brandrisse und Spannungen sind. Die geringere Festigkeit in dem Scheibenkranz wird durch die hohe Zugfestigkeit des Innentopfes, insbesondere durch die Herstellung im Verbundguß, wieder kompensiert. Die unterschiedlichen Temperaturbeaufschlagungen von Scheibenkranz und Tragring sowie die unterschiedlichen Ausdehnungskoeffizienten der Gußwerkstoffe führen nicht zu Materialspannungen im Verbindungsbereich, da eine begrenzte Verschiebbarkeit in radialer Richtung gegeben ist.

Durch Verbundgießen ist die Bremsscheibe auf einfache Weise herstellbar, denn der aus einem hochfesten Material gegossene Innenteil wird für das Gießen der Scheibe auf einen eingelegten Kern gesteckt und dann wird die Form mit dem Material für den Scheibenkranz gefüllt, wobei das Material des Scheibenkranzes nicht nur in seitliche Bereiche des Tragringes, sondern auch in die radialen Vertiefungen gelangt.

Gemäß einer bevorzugten Ausgestaltung des Erfindungsgegenstandes umfaßt die Bremsscheibe in an sich bekannter Weise zwei Reibringe, die über eine Vielzahl in axialer Richtung verlaufender Stege verbunden sind, wobei zumindest einige dieser Stege an ihrem radial innen liegenden Ende einen Abschnitt aufweisen, mit dem sie in die als Nuten ausgebildeten radialen Vertiefungen des Tragringes eingreifen. Ein solcher Scheibenkranz bietet die Möglichkeit, daß die ohnehin vorhandenen Stege zur Drehmomentübertragung benutzt werden.

Damit beim Wechsel von Vorwärtsfahrt zu Rückwärtsfahrt und umgekehrt keine sogenannten Reversiergeräusche auftreten können, ist es zweckmäßig, daß die axial verlaufenden Flächen der Abschnitte an Wandteilen der Nuten in Drehmomentrichtung spielfrei anliegen und gegenüber diesen radial beweglich gelagert sind. Auf diese Weise ist die radiale Beweglichkeit garantiert, Klappergeräusche beim Reversieren der Fahrtrichtung infolge aneinanderschlagender Metallteile treten jedoch nicht auf.

Die Anzahl der Rippen, die in Vertiefungen des Tragringes eingreifen und somit an der Drehmomentübertragung beteiligt sind, kann nach den Erfordernissen, die an die Bremsscheibe gestellt werden, bestimmt sein. Eine Anzahl von zwanzig Rippen, die über den Kreisumfang gleichmäßig verteilt angeordnet sind, hat sich als günstig erwiesen. In weiterer Ausgestaltung ist zwischen jeweils zwei benachbarten Stegen, die in den Tragring eingreifen, ein zusätzlicher Steg vorgesehen, dessen radial inneres Ende außerhalb des Tragringes liegt. Durch diese zusätzlichen Stege wird zum einen die Festigkeit des Scheibenkranzes erhöht, darüberhinaus wirken diese Stege als zusätzliche Schaufeln zur Förderung von Kühlluft in den zwischen den Reibringen und Stegen gebildeten Kanälen.

Um die Freigängigkeit zum Ausgleich der unterschiedlichen Dehnung in radialer Richtung zu gewährleisten, ist es von Vorteil, daß die sich gegenüberliegenden Flächen des Scheibenkranzes und des Tragringes in radialer Richtung einen Abstand von ca. 3 mm aufweisen. Es ist außerdem zweckmäßig, den Scheibenkranz in axialer Richtung spielfrei auf dem Tragring zu fixieren, was auf einfache Weise dadurch erreicht wird, daß die Mittel zur axialen Fixierung durch den Tragring seitlich flankierende Abschnitte der Stege des Scheibenkranzes gebildet sind.

Als besonders geeignetes Material für den Innentopf hat sich Grauguß mit einer Zugfestigkeit von mindestens 250 N/mm² (GG 25) oder Grauguß mit einer Zugfestigkeit von 300 N/mm² (GG 30) erwiesen. Für besonders hohe Beanspruchungen kann der Innentopf auch aus Grauguß mit Kugelgraphit mit einer Zugfestigkeit von mindestens 400 N/mm³ (GGG 40) bestehen. Der Innentopf besteht vorzugsweise aus einem Stahl geeigneter Qualität, der sich durch Tiefziehen, Fließdrücken oder ähnliche Verformungsvorgänge in die erforderliche Form überführen läßt. Als Material für den Innentopf ist insbesondere Sinterstahl vorteilhaft, der in einem geeigneten pulvermetallurgischen Verfahren geformt wird. Für den Scheibenkranz, der durch das Zusammenwirken mit den Reibbelägen insbesondere einer großen thermischen Belastung ausgesetzt ist, soll das Material ein Grauguß mit hohem Kohlenstoffanteil sein. Als Material für den Scheibenkranz wird daher Grauguß mit einer Zugfestigkeit von 100 oder 150 N/mm² (GG 10 oder GG 15) vorgeschlagen.

Die erfindungsgemäße Bremsscheibe für Scheibenbremsen ist nachstehend anhand der Zeichnungen näher erläutert. In der Zeichnung zeigt:
- Fig. 1: einen radialen Schnitt durch eine erste Ausführungsform der Bremsscheibe,
- Fig. 2: einen Schnitt längs der Linie II-II in Fig. 1,
- Fig. 3: einen Schnitt längs der Linie III-III in Fig. 2,
- Fig. 4: einen Schnitt längs der Linie IV-IV in Fig. 2.

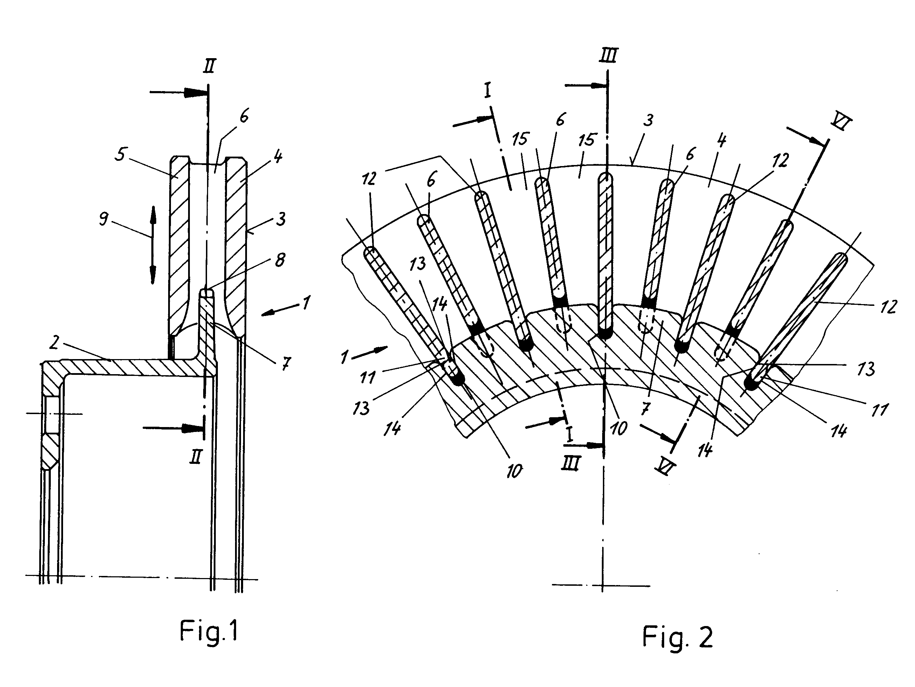

In Fig. 1 ist eine Bremsscheibe 1 im radialen Schnitt dargestellt, die aus einem Innentopf 2 und einem darauf befestigten Scheibenkranz 3 besteht. Der Scheibenkranz 3 umfaßt zwei Reibringe 4 und 5, die über eine Vielzahl von sich zwischen diesen erstreckenden Stegen 6 miteinander verbunden sind. Der Innentopf 2 weist an seinem Außenumfang einen Tragring 7 auf, der sich in den radial innen liegenden Bereich des Scheibenkranzes 3 zwischen den Reibringen 4 und 5 erstreckt. Wie aus Fig. 1 ersichtlich ist, ist ein radialer Abstand zwischen dem Tragring 7 und einer entsprechenden Ausnehmung 8 des Steges 6 vorhanden, durch den eine radiale Freigängigkeit zum Ausgleich der unterschiedlichen Wärmedehnung von Innentopf 2 und Scheibenkranz 3 gewährleistet ist. Die Bewegungsrichtung bei Dehnung durch Wärmeeinwirkung ist mit den Pfeilen 9 angegeben.

Fig. 2 zeigt einen Schnitt längs der Linie II-II in Fig. 1. Aus dieser Darstellung ist ersichtlich, daß der Tragring 7 radiale Vertiefungen 10 in Form von sich in axialer Richtung erstreckender Nuten aufweist, in die die radial innen liegenden Abschnitte 11 von Stegen 12 des Scheibenkranzes 3 eingreifen. Die radial innere Begrenzung der Abschnitte 11 ist vom Grund der Vertiefung 10 in einem bestimmten Abstand, beispielsweise 3 mm, angeordnet, durch den die radiale Freigängigkeit der beiden Teile zueinander gewährleistet ist. In Drehrichtung der Bremsscheibe 1 gesehen, liegen die inneren Abschnitte 11 der Stege 12 mit in axialer Richtung verlaufenden Flächen 13 an Wandteilen 14 der Nuten bzw. Vertiefungen 10 spielfrei an. Zwischen jeweils zwei benachbarten Stegen 12 ist ein weiterer Steg 6 angeordnet, so daß zwischen den Stegen 6 und 12 eine Vielzahl von Kühlkanälen 15 zum Durchtritt von Luft gebildet sind. Ebenso wie die Stege 12 besitzen die Stege 6 einen radialen Abstand zur entsprechenden Fläche des Tragringes 7. In Fig. 2 ist mit den Linien I-I, III-III und IV-IV die jeweilige Darstellung der Fig. 1, 3 und 4 angegeben.

Der Innentopf 2 wird mit dem an seinem Außenumfang vorgesehenen Tragring 7 als Gußteil hergestellt, wobei wegen der erforderlichen Festigkeit als Material ein Grauguß mit einer Zugfestigkeit von mindestens 250 N/mm² in Betracht kommt. Der Innentopf 2 wird in die Gußform für den Scheibenkranz 3 eingelegt, und es erfolgt im sogenannten Verbundgießverfahren das Gießen des Scheibenkranzes 3, wodurch Material des Scheibenkranzes in die radialen Vertiefungen 10 des Tragringes 7 gelangt und somit der Tragring 7 und die Stege 12 des Scheibenkranzes 3 wie Zähne ineinandergreifen.

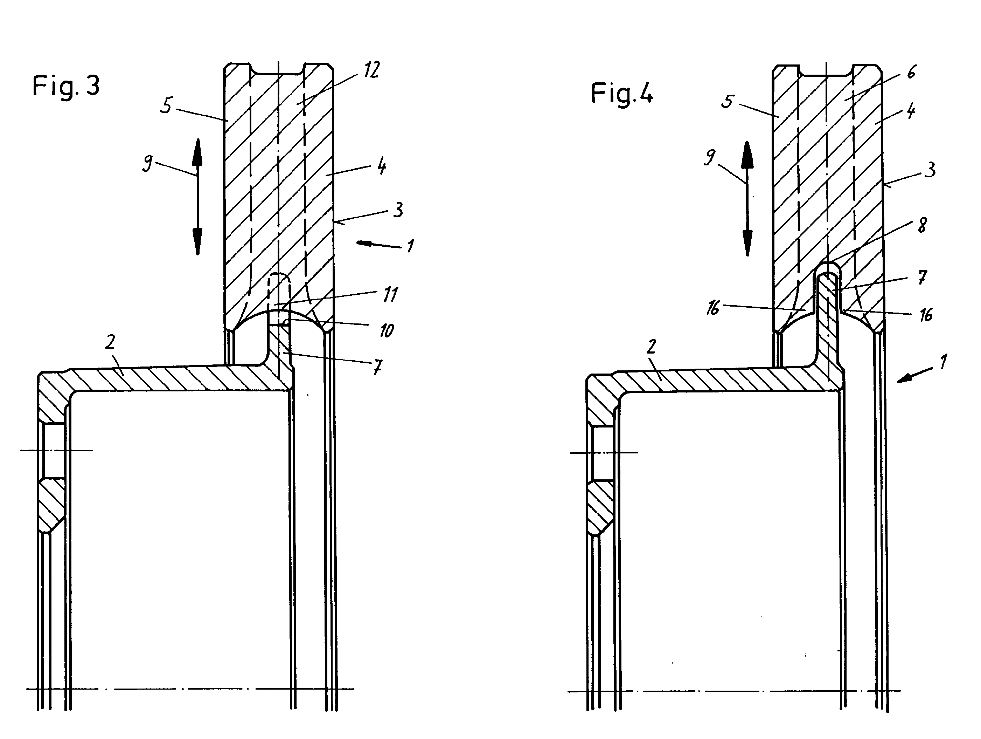

In Fig. 3 ist ein Schnitt längs der Linie III-III in Fig. 2 in vergrößerter Darstellung gezeigt. Aus dieser Ansicht ist das untere Ende der radialen Vertiefung 10 sowie der innerhalb der Vertiefung 10 befindliche Abschnitt 11 des Steges 12 zu sehen. Im übrigen stimmen die verwendeten Bezugszeichen mit denjenigen der entsprechenden Teile in Fig. 1 und Fig. 2 überein.

Fig. 4 zeigt eine ähnliche Darstellung wie in Fig. 3, es ist dies jedoch der Schnitt längs der Linie IV-IV in Fig. 2. Aus dieser Darstellung wird deutlich, daß der Tragring 7 sich um ein beträchtliches Stück in den Zwischenraum zwischen den Reibringen 4 und 5 des Scheibenkranzes 3 erstreckt. Der Steg 6 hat eine Ausnehmung 8, durch die die radiale Freigängigkeit der beiden Teile zueinander gewährleistet ist. Seitlich neben dem Tragring 7 weist der Steg 6 flankierende Abschnitte 16 auf, die seitlich an dem Tragring 7 anliegen und damit zu einer Fixierung in axialer Richtung führen. Im übrigen sind die Darstellung und die verwendeten Bezugszeichen gleich denjenigen zu den bereits beschriebenen Fig. 1 bis 3.

## Patentansprüche

1. Bremsscheibe für Scheibenbremsen, insbesondere für Kraftfahrzeuge, mit einem mindestens einen Reibring (4,5) umfassenden und aus einem Gußwerkstoff bestehenden Scheibenkranz (3), der auf einem ebenfalls aus einem Gußwerkstoff bestehenden Innentopf (2) befestigt ist, derart, daß der Scheibenkranz (3) gegenüber dem Innentopf (2) radial elastisch gelagert ist,
dadurch gekennzeichnet, daß der Innentopf (2) einen Tragring (7) mit radialen Vertiefungen (10) aufweist, in die Teile des Scheibenkranzes (3) radial begrenzt verschiebbar und in Drehmomentrichtung formschlüssig eingreifen, und daß der Innentopf (2) aus einem Material mit höherer Zugfestigkeit besteht als das Material des Scheibenkranzes (3) und der Scheibenkranz (3) mittels Verbundgießen auf dem Innentopf (2) befestigt ist.

2. Bremsscheibe nach Anspruch 1,
dadurch gekennzeichnet, daß der Scheibenkranz (3) zwei Reibringe (4, 5) umfaßt, die über eine Vielzahl in axialer Richtung verlaufender Stege (6, 12) verbunden sind, wobei zumindest einige dieser Stege (12) an ihrem radial innen liegenden Ende einen Abschnitt (11) aufweisen, mit dem sie in die als Nuten ausgebildeten radialen Vertiefungen (10) des Tragringes (7) eingreifen.

3. Bremsscheibe nach Anspruch 2,
dadurch gekennzeichnet, daß die axial verlaufenden Flächen (13) der Abschnitte (11) an Wandteilen (14) der Nuten in Drehmomentrichtung spielfrei anliegen und gegenüber diesen radial beweglich gelagert sind.

4. Bremsscheibe nach Anspruch 2 oder 3,
dadurch gekennzeichnet, daß über den gesamten Kreisumfang des Scheibenkranzes (3) gleichmäßig verteilt zwanzig Stege (12) angeordnet sind und jeder dieser Stege (12) in eine dieser radialen Vertiefungen (10) des Tragringes (7) eingreift, wobei vorzugsweise zwischen jeweils zwei benachbarten Stegen (12), die in den Tragring (7) eingreifen, ein zusätzlicher Steg (6) vorgesehen ist, dessen radial inneres Ende außerhalb des Tragringes (7) liegt.

5. Bremsscheibe nach einem der Ansprüche 1 bis 4,
dadurch gekennzeichnet, daß die sich gegenüberliegenden Flächen des Scheibenkranzes (3) und des Tragringes (7) in radialer Richtung einen Abstand von ca. 3 mm aufweisen.

6. Bremsscheibe nach einem der Ansprüche 1 bis 5,
dadurch gekennzeichnet, daß der Scheibenkranz (3) Mittel zu seiner axialen Fixierung auf dem Tragring (7) aufweist, wobei diese Mittel durch den Tragring (7) seitlich flankierende Abschnitte (16) der Stege (6) gebildet sind.

7. Bremsscheibe nach einem der Ansprüche 1 bis 6,
dadurch gekennzeichnet, daß der Innentopf (2) aus einem Grauguß mit einer Zugfestigkeit von mindestens 250 N/mm² (GG 25), vorzugsweise Grauguß mit einer Zugfestigkeit von 300 N/mm² (GG 30) besteht.

8. Bremsscheibe nach einem der Ansprüche 1 bis 6,
dadurch gekennzeichnet, daß der Innentopf (2) aus einem Grauguß mit Kugelgraphit mit einer Zugfestigkeit von mindestens 400 N/mm² (GGG 40) besteht.

9. Bremsscheibe nach einem der Ansprüche 1 bis 6,
dadurch gekennzeichnet, daß der Innentopf (2) aus einem im pulvermetallurgischen Verfahren geformten Sinterstahl besteht.

10. Bremsscheibe nach einem der Ansprüche 1 bis 6,
dadurch gekennzeichnet, daß der Innentopf (2) aus einem durch Tiefziehen oder Fließdrücken verformten Stahl besteht.

11. Bremsscheibe nach einem der Ansprüche 1 bis 10,
dadurch gekennzeichnet, daß der Scheibenkranz (3) aus einem Material mit hohem Kohlenstoffanteil besteht, vorzugsweise aus Grauguß mit einer Zugfestigkeit von 100 oder 150 N/mm².

## Claims

1. Brake disc for disc brakes, in particular for motor vehicles, with a disc rim (3) comprising at least one friction ring (4, 5) and consisting of a cast material, which is attached to an inner cup (2) likewise consisting of a cast material so that the disc rim (3) is mounted in a radially resilient manner with respect to the inner cup (2), characterised in that the inner cup (2) comprises a support ring (7) with radial recesses (10), in which parts of the disc rim (3) are displaceable in a radially restricted manner and engage in a form-locking manner in the direction of the torque, and that the inner cup (2) consists of a material with a higher tensile strength that the material of the disc rim (3) and the disc rim (3) is fastened to the inner cup (2) by means of compound casting.

2. Brake disc according to Claim 1, characterised in that the disc rim (3) comprises two friction rings (4, 5), which are connected by way of a plurality of webs (6, 12) extending in the axial direction, at least some of these webs (12) comprising on their radially inner end, a section (11), by which they engage in the radial recesses (10) of the support ring (7), which are constructed as grooves.

3. Brake disc according to Claim 2, characterised in that the axially extending surfaces (13) of the sections (11) bear without clearance on wall parts (14) of the grooves in the direction of the torque and are mounted to move radially with respect to the latter.

4. Brake disc according to Claim 2 or 3, characterised in that twenty webs (12) are distributed uniformly over the entire periphery of the disc rim (3) and each of these webs (12) engages in one of these radial recesses (10) of the support ring (7), an additional web (6) preferably being provided between respectively two adjacent webs (12), which engage in the support ring (7), the radially inner end of which additional web (6) lies outside the support ring (7).

5. Brake disc according to one of Claims 1 to 4, characterised in that the opposing surfaces of the disc rim (3) and of the support ring (7) have a spacing of approximately 3 mm in the radial direction.

6. Brake disc according to one of Claims 1 to 5, characterised in that the disc rim (3) comprises means for fixing it axially to the support ring (7), these means being formed by sections (16) of the webs (6) flanking the support ring (7) laterally.

7. Brake disc according to one of Claims 1 to 6, characterised in that the inner cup (2) consists of a grey cast iron with a tensile strength of at least 250 N/mm² (GG 25), preferably grey cast iron with a tensile strength of 300 N/mm² (GG 30).

8. Brake disc according to one of Claims 1 to 6, characterised in that the inner cup (2) consists of a grey cast iron with spheroidal graphite with a tensile strength of at least 400 N/mm² (GGG 40).

9. Brake disc according to one of Claims 1 to 6, characterised in that the inner cup (2) consists of a sintered steel formed by the powder metallurgical process.

10. Brake disc according to one of Claims 1 to 6, characterised in that the inner cup (2) consists of a steel formed by deep-drawing or impact extrusion.

11. Brake disc according to one of Claims 1 to 10, characterised in that the disc rim (3) consists of a material with a high proportion of carbon, preferably of grey cast iron with a tensile strength of 100 or 150 N/mm².

## Revendications

1. Disque de frein pour freins à disque, pour des véhicules automobiles notamment, avec une couronne de disque (3) comportant un anneau de friction (4, 5) au moins, composée d'un matériau en fonte, et fixée sur une nacelle (2), également composée d'un matériau en fonte, de telle sorte que la couronne de disque (3) est montée avec une élasticité radiale par rapport à la nacelle (2), caractérisé en ce que la nacelle (2) présente un anneau porteur (7) avec des cavités radiales (10), dans lesquelles s'engagent des éléments de la couronne de disque (3), avec une possibilité de déplacement radial limitée et par engagement positif dans le sens du couple, et en ce que la nacelle (2) se compose d'un matériau d'une résistance à la traction plus élevée que le matériau de la couronne de disque (3), la couronne (3) étant fixée par coulée composite sur la nacelle (2).

2. Disque de frein suivant la revendication 1, caractérisé en ce que la couronne de disque (3) comporte deux anneaux de friction (4, 5), assemblés par plusieurs entretoises (6, 12) s'étendant dans le sens axial, quelques-unes de ces entretoises (12) au moins présentant sur leur extrémité radiale interne une section (11), par laquelle elles s'engagent dans les cavités radiales (10) de l'anneau porteur (7), réalisées sous forme de rainures.

3. Disque de frein suivant la revendication 2, caractérisé en ce que les surfaces (13) des sections (11), s'étendant dans le sens axial, s'appliquent sans jeu sur des éléments de paroi (14) des rainures, dans le sens du couple, et sont logées avec une possibilité de déplacement radial par rapport à ces éléments.

4. Disque de frein suivant l'une des revendications 2 et 3, caractérisé en ce que vingt entretoises (12) sont régulièrement réparties sur la totalité de la circonférence de la couronne de disque (3), et en ce que chacune de ces entretoises (12) s'engage dans l'une de ces cavités radiales (10) de l'anneau porteur (7), une entretoise (6) supplémentaire, dont l'extrémité radiale interne se situe à l'extérieur de l'anneau porteur (7), étant de préférence prévue entre deux entretoises adjacentes (12), qui s'engagent dans l'anneau porteur (7).

5. Disque de frein suivant l'une quelconque des revendications 1 à 4, caractérisé en ce que les surfaces en vis-à-vis de la couronne de disque (3) et de l'anneau porteur (7) présentent une distance de 3 mm environ dans le sens radial.

6. Disque de frein suivant l'une quelconque des revendications 1 à 5, caractérisé en ce que la couronne de disque (3) présente des moyens pour sa fixation axiale sur l'anneau porteur (7), ces moyens étant formés par des sections (16) des entretoises (6), flanquant latéralement l'anneau porteur (7).

7. Disque de frein suivant l'une quelconque des revendications 1 à 6, caractérisé en ce que la nacelle (2) se compose d'une fonte grise d'une résistance à la traction de 250 N/mm² au moins (GG 25), d'une fonte grise d'une résistance à la traction de 300 N/mm² (GG 30), de préférence.

8. Disque de frein suivant l'une quelconque des revendications 1 à 6, caractérisé en ce que la nacelle (2) se compose d'une fonte grise à graphite sphéroïdal, d'une résistance à la traction de 400 N/mm² au moins (GGG 40).

9. Disque de frein suivant l'une quelconque des revendications 1 à 6, caractérisé en ce que la nacelle (2) se compose d'un acier fritté, formé dans un procédé de métallurgie des poudres.

10. Disque de frein suivant l'une quelconque des revendications 1 à 6, caractérisé en ce que la nacelle (2) se compose d'un acier formé par emboutissage profond ou par fluotournage.

11. Disque de frein suivant l'une quelconque des revendications 1 à 10, caractérisé en ce que la couronne de disque (3) se compose d'un matériau avec une part élevée de carbone, d'une fonte grise de préférence d'une résistance à la traction de 100 ou 150 N/mm².
